# EUROPÄISCHE PATENTSCHRIFT

(11) **EP 3 300 579 B1**
(45) Veröffentlichungstag und Bekanntmachung des Hinweises auf die Patenterteilung: **18.11.2020**
(21) Anmeldenummer: 17185443.3
(22) Anmeldetag: 09.08.2017
(51) Int. Cl.: A01D 41/127

(54) **SELBSTFAHRENDE LANDWIRTSCHAFTLICHE ARBEITSMASCHINE**
SELF-PROPELLED AGRICULTURAL MACHINE
MACHINE AGRICOLE AUTOMOTRICE

(30) Priorität: 30.09.2016 DE 102016118651
(43) Veröffentlichungstag der Anmeldung: 04.04.2018
(73) Patentinhaber: CLAAS Selbstfahrende Erntemaschinen GmbH, 33428 Harsewinkel (DE)
(72) Erfinder: Middelberg, René, 49080 Osnabrück (DE); Krause, Thilo, 39249 Glinde (DE); Baumgarten, Joachim, 48361 Beelen (DE); Wilken, Andreas, 49143 Bissendorf (DE); Heitmann, Christoph, 48231 Warendorf (DE); Bormann, Bastian, 23749 Grube (DE); Neu, Sebastian, 49196 Bad Laer (DE); Herter, Felix, 33428 Harsewinkel (DE); Bussmann, Christoph, 33428 Harsewinkel (DE); Kettelhoit, Boris, 33335 Gütersloh (DE); Vöcking, Henner, 33397 Rietberg (DE)
(74) Vertreter: CLAAS Gruppe

(56) Entgegenhaltungen:
- EP-A1- 2 060 164
- EP-A1- 2 220 926
- EP-A1- 2 954 772
- DE-A1- 19 726 917

## Beschreibung

Die Erfindung betrifft eine selbstfahrende landwirtschaftliche Arbeitsmaschine gemäß dem Oberbegriff von Anspruch 1.

Der Begriff "selbstfahrende landwirtschaftliche Arbeitsmaschine" ist vorliegend weit zu verstehen. Darunter fallen nicht nur Erntemaschinen, wie Mähdrescher und Feldhäcksler, sondern auch Zugmaschinen wie Traktoren o. dgl..

Der effizienten Abarbeitung eines landwirtschaftlichen Arbeitsprozesses kommt heute zunehmende Bedeutung zu. Dies betrifft insbesondere bei Erntemaschinen das zielgerichtete Abfahren von Fahrspuren, um sicherzustellen, dass ein maximaler Ernteertrag erzielt wird. Gleichzeitig muss dafür gesorgt werden, dass der Feldboden durch ungünstig gewählte Fahrspuren nicht langfristig geschädigt wird. Ein Beispiel hierfür ist eine ungewünschte Bodenverdichtung. Eine Strategie zur Vermeidung ungewünschter Bodenverdichtungen besteht darin, bei der wiederholten Bearbeitung eines Feldes stets dieselben Fahrgassen zu benutzen. Zur Unterstützung des Benutzers sind Fahrerassistenzsysteme bekannt geworden, die eine sensorbasierte Spurverfolgung bereitstellen.

Die bekannte Arbeitsmaschine (DE 197 26 917 A1), von der die Erfindung ausgeht, weist ein Fahrerassistenzsystem zur Spurverfolgung auf, bei dem die Spurverfolgung auf den Sensordaten eines Laserentfernungssensors basiert. Für weitere Anwendungen, beispielsweise für die Ansteuerung eines Vorsatzgeräts, wird der Laserentfernungssensor zur Abtastung einer Ährenoberfläche eines Getreidefeldes benutzt.

Im Einzelnen wird bei der bekannten Arbeitsmaschine zur Spurverfolgung eine Furche oder ein Schwad mittels des Laserentfernungssensors abgetastet. Fehlt eine solche Furche oder ein solcher Schwad, so liefert die Spurverfolgung keine Steuersignale, so dass die Effizienz beim Abfahren von Fahrspuren beeinträchtigt ist.

Der Erfindung liegt das Problem zu Grunde, die bekannte selbstfahrende landwirtschaftliche Arbeitsmaschine derart auszugestalten und weiterzubilden, dass die Effizienz bei der Abarbeitung des landwirtschaftlichen Arbeitsprozesses, insbesondere im Hinblick auf das Abfahren von Fahrspuren, gesteigert wird.

Vorschlagsgemäß wird zunächst davon ausgegangen, dass die Arbeitsmaschine eine Umfelddetektionseinrichtung zur Erfassung von Gutbestands-Merkmalen eines Gutbestands und von Boden-Merkmalen eines Feldbodens aufweist. Wesentlich dabei ist die grundsätzliche Überlegung, dass sich aus den Gutbestands-Merkmalen charakteristische Gutbestands-Eigenschaften und aus den Boden-Merkmalen charakteristische Boden-Eigenschaften ableiten lassen. Wesentlich ist weiter ganz allgemein die Erkenntnis, dass ein und derselbe Steuerprozess sowohl durch die charakteristischen Boden-Eigenschaften als auch durch die charakteristischen Gutbestands-Eigenschaften ausgelöst werden kann. Bei geeigneter Auslegung ist es damit grundsätzlich möglich, dass der Steuerprozess sowohl basierend auf der Detektion des Gutbestands als auch basierend auf der Detektion des Feldbodens ablaufen kann. Wiederum bei geeigneter Auslegung ist es damit möglich, dass die Detektion des Gutbestands und die Detektion des Feldbodens wechselweise für den Ablauf des Steuerprozesses herangezogen werden könne.

Bei der besonders bevorzugten Ausgestaltung gemäß Anspruch 5 handelt es sich bei dem Steuerprozess um die Ermittlung einer Soll-Fahrspur nach einer Fahrspurstrategie, die basierend auf den analysierten charakteristischen Gutbestands-Eigenschaften und auf den analysierten charakteristischen Boden-Eigenschaften abläuft. Bei den Gutbestands-Eigenschaften kann es sich dabei um die Existenz und Lage einer bestimmten Bestandskante handeln, während es sich bei den Boden-Eigenschaften um die Existenz und Lage einer vorhandenen, insbesondere vor der Arbeitsmaschine liegenden Fahrgasse handeln kann. Es liegt auf der Hand, dass für den Ablauf des Steuerprozesses nicht sowohl die Gutbestands-Eigenschaften als auch die Boden-Eigenschaften notwendig sind. Vielmehr reicht es aus, wenn entweder die Gutbestands-Eigenschaften oder die Boden-Eigenschaften vorliegen. Fehlen beispielsweise Umfeldinformationen zum Feldboden, so lässt sich die Soll-Fahrspur nach der Fahrspurstrategie immer noch ohne Weiteres basierend auf den Gutbestands-Eigenschaften, also aus der Existenzgrundlage der Bestandskante, ermitteln. Dies ist Gegenstand von Anspruch 8.

Bei der weiter bevorzugten Ausgestaltung gemäß Anspruch 9 ist gewissermaßen eine Priorisierung der Boden-Eigenschaften über die Gutbestands-Eigenschaften vorgenommen worden, derart, dass die Soll-Fahrspur grundsätzlich basierend aus den Boden-Eigenschaften ermittelt wird. Nur wenn die hierfür notwendigen Boden-Eigenschaften, also beispielsweise eine Fahrgasse, nicht ermittelt werden konnten, wird die Soll-Fahrspur basierend auf den Gutbestands-Eigenschaften, beispielsweise basierend auf der Existenz und Lage einer Bestandskante, ermittelt. Andere Varianten der Priorisierung sind denkbar.

Für die Ermittlung der Fahrspurstrategie im Rahmen des obigen Steuerprozesses sind in Abhängigkeit von dem jeweiligen Anwendungsfall ganz unterschiedliche vorteilhafte Varianten denkbar. Bei den beiden Alternativen gemäß Anspruch 10 geht es beispielsweise darum, einen auf ein Befahren durch die Arbeitsmaschine zurückgehenden Ernteschaden bzw. ein auf ein Befahren durch die Arbeitsmaschine zurückgehendes Bodenverdichtungsrisiko zu minimieren. Ein solcher Ernteschaden lässt sich beispielsweise dadurch vermeiden, indem basierend auf der Ermittlung der Gutbestands-Eigenschaften eine Fahrspur gewählt wird, die nicht mit einem Überfahren des Gutbestands verbunden ist. Die Minimierung des Bodenverdichtungsrisikos lässt sich dadurch erreichen, dass, wie oben angesprochen, stets dieselben Fahrgassen benutzt werden.

Die vorschlagsgemäße Umfelddetektionseinrichtung lässt sich vorteilhaft für weitere von dem Fahrerassistenzsystem ausgelöste Steuerprozesse nutzen. Beispielsweise wird gemäß Anspruch 11 vorgeschlagen, dass eine Kollisionsvermeidungsroutine basierend auf den analysierten charakteristischen Boden-Eigenschaften ausgelöst wird. Vorzugsweise wird im Rahmen dieser Kollisionsvermeidungsroutine eine Ansteuerung etwa des Vorsatzgeräts der Arbeitsmaschine ausgelöst, wie in Anspruch 12 vorgeschlagen. Diese Doppelnutzung der Umfelddetektionseinrichtung führt zu einer kostengünstigen und insbesondere steuerungstechnisch wenig aufwändigen Anordnung.

Andere Arten des vorschlagsgemäßen Steuerprozesses sind denkbar. Bei der besonders bevorzugten Ausgestaltung gemäß Anspruch 13 findet der vorschlagsgemäße Steuerprozess im Rahmen des Vorgewende-Managements Anwendung. Dies ist insbesondere sachgerecht, da beim Einfahren einer Erntemaschine in den Gutbestand sowohl gutbestandsspezifische Informationen wie das Vorliegen einer Bestandskante als auch bodenspezifische Informationen wie das Vorliegen von Hindernissen von Bedeutung sind.

Im Folgenden wird die Erfindung anhand einer lediglich ein Ausführungsbeispiel darstellenden Zeichnung näher erläutert. In der Zeichnung zeigt:
- Fig. 1: eine vorschlagsgemäße selbstfahrende landwirtschaftliche Arbeitsmaschine während der Abarbeitung eines landwirtschaftlichen Arbeitsprozesses in einer Ansicht von oben,
- Fig. 2: die landwirtschaftliche Arbeitsmaschine gemäß Fig. 1 in einer Seitenansicht und

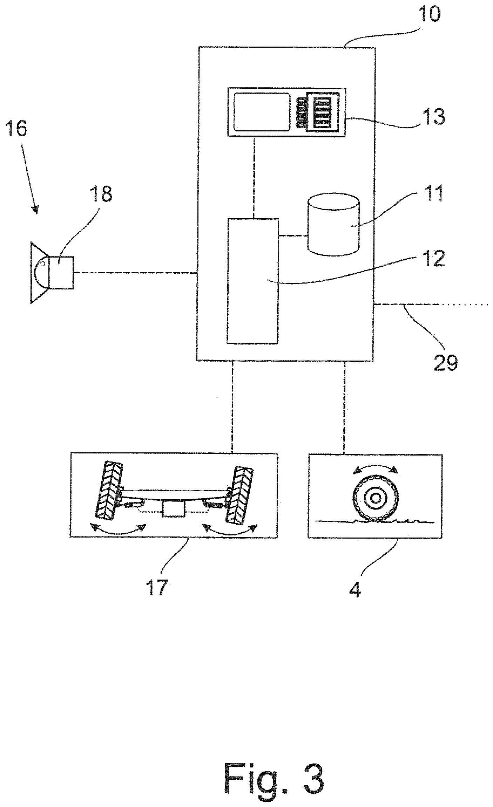

- Fig. 3: den grundsätzlichen Aufbau des Fahrerassistenzsystems der landwirtschaftlichen Arbeitsmaschine mit einer Reihe daran angeschlossener Komponenten gemäß Fig. 1.

Die vorschlagsgemäße Lösung lässt sich auf einen weiten Bereich selbstfahrender landwirtschaftlicher Arbeitsmaschinen, insbesondere auf Erntemaschinen, anwenden. Dazu gehören Mähdrescher, Feldhäcksler, Zugmaschinen, insbesondere Traktoren, o. dgl. Bei dem dargestellten und insoweit bevorzugten Ausführungsbeispiel handelt es sich bei der Arbeitsmaschine 1 um einen Mähdrescher, der in an sich üblicher Weise mit einem Vorsatzgerät 2 ausgestattet ist. Alle Ausführungen zu einem Mähdrescher gelten für alle anderen Arten von Arbeitsmaschinen entsprechend. Die landwirtschaftliche Arbeitsmaschine 1 dient der Abarbeitung eines landwirtschaftlichen Arbeitsprozesses durch ein Abfahren von Fahrspuren 3a-d. Für den Fall, dass es sich wie im dargestellten Ausführungsbespiel bei der Arbeitsmaschine 1 um einen Mähdrescher handelt, läuft während der Abarbeitung des landwirtschaftlichen Arbeitsprozesses in der Arbeitsmaschine 1 ein Ernteverarbeitungsprozess, der einen Dreschprozess beinhaltet.

Die vorschlagsgemäße Arbeitsmaschine 1 ist mit mindestens einem Arbeitsorgan 4-9 ausgestattet. Eine als Mähdrescher ausgestaltete Arbeitsmaschine 1 weist vorzugsweise die Arbeitsorgane Fahrantrieb 4, Schneidwerk 5, Dreschwerk 6, Abscheidevorrichtung 7, Reinigungsvorrichtung 8 und Verteilvorrichtung 9 auf.

Ferner ist die Arbeitsmaschine 1 mit einem Fahrerassistenzsystem 10 zur Ansteuerung der Arbeitsorgane 4-9 ausgestattet.

Das Fahrerassistenzsystem 10 weist einen Speicher 11 zum Hinterlegen von Daten, eine Rechenvorrichtung 12 zur Verarbeitung der in dem Speicher 11 hinterlegten Daten und eine graphische Benutzerschnittstelle 13 zur Benutzereingabe und -ausgabe von Daten auf. Das Fahrerassistenzsystem 10 dient unter anderem der Ansteuerung der Arbeitsorgane 4-9.

Zur Erfassung von Gutbestands-Merkmalen eines Gutbestands 14 und von Boden-Merkmalen eines Feldbodens 15 weist die Arbeitsmaschine 1 eine Umfelddetektionseinrichtung 16 auf. Bei diesen Merkmalen handelt es sich um geometrische Merkmale von Gutbestand 14 und Feldboden 15, wie noch erläutert wird.

Vorschlagsgemäß ist es vorgesehen, dass das Fahrerassistenzsystem 10 in einem ersten Schritt die Gutbestands-Merkmale auf vorbestimmte charakteristische Gutbestands-Eigenschaften und die Boden-Merkmale auf vorbestimmte charakteristische Boden-Eigenschaften hin analysiert. Die jeweiligen charakteristischen Eigenschaften lassen sich nach einer vorbestimmten Vorschrift, beispielsweise durch eine vorbestimmte Reihe von Kriterien, von den betreffenden Merkmalen ableiten. Beispiele hierfür werden weiter unten gegeben.

In Abhängigkeit von den analysierten charakteristischen Gutbestands-Eigenschaften und von den analysierten charakteristischen Boden-Eigenschaften setzt das Fahrerassistenzsystem vorschlagsgemäß einen Steuerprozess um, der hier und vorzugsweise die abzufahrenden Fahrspuren 3a-d betrifft. Der Begriff "umsetzt" bedeutet vorliegend, dass das Fahrerassistenzsystem 10 den Steuerprozess zumindest startet. Es ist denkbar, dass andere Steuerkomponenten den Steuerprozess fortsetzen.

Der Begriff "Steuerprozess" ist vorliegend weit auszulegen. Er betrifft einen Prozess, in dem ausschließlich im engen Sinne gesteuert wird. Der Steuerprozess kann im Sinne der weiten Auslegung aber auch Regelaufgaben, die einen Regelkreis mit Rückkopplungszweig umfassen, beinhalten.

Es ergibt sich aus der obigen Erläuterung, dass die Umsetzung des vorschlagsgemäßen Steuerprozesses ganz allgemein in Abhängigkeit von den analysierten charakteristischen Gutbestands-Eigenschaften und von den analysierten charakteristischen Boden-Eigenschaften erfolgt, so dass sowohl eine gutbestandsspezifische Detektion als auch eine bodenspezifische Detektion in die Umsetzung des Steuerprozesses eingehen. Die hiermit verbundenen Vorteile wurden weiter oben bereits erläutert.

Grundsätzlich können die in dem Steuerprozess ermittelten Prozessgrößen dem Benutzer über die Benutzerschnittstelle 13 lediglich zur Anzeige gebracht werden. Bei dem dargestellten und insoweit bevorzugten Ausführungsbeispiel ist es allerdings vorgesehen, dass diese noch zu erläuternden Prozessgrößen die Basis für die automatische Ansteuerung des Fahrantriebs 4 und/oder eines automatischen Lenksystems 17 ist. Im Einzelnen ist es vorgesehen, dass das Fahrerassistenzsystem 10, insbesondere die Rechenvorrichtung 12, den Fahrantrieb 4 und das Lenksystem 17 basierend auf in dem Steuerprozess ermittelten Prozessgrößen automatisch ansteuert.

Für die Realisierung der Umfelddetektionseinrichtung 16 sind in Abhängigkeit von dem jeweiligen Anwendungsfall unterschiedliche Varianten denkbar. Bei einer kostengünstigen und gleichzeitig robusten Variante ist die Umfelddetektionseinrichtung 16 zur Erfassung der Gutbestands-Merkmale des Gutbestands 14 bzw. von Boden-Merkmalen eines Feldbodens 15 mit mindestens einem optischen Sensor 18, hier und vorzugsweise mit genau einem optischen Sensor 18, zur Erzeugung von Sensordaten ausgestattet. Der Erfassungsbereich 19 erstreckt sich bei dem dargestellten Ausführungsbeispiel lediglich in Fahrtrichtung der landwirtschaftlichen Arbeitsmaschine 1.

Grundsätzlich kann sich der Erfassungsbereich 19 alternativ oder zusätzlich quer zu der Fahrtrichtung und weiter alternativ oder zusätzlich entgegen der Fahrtrichtung der Arbeitsmaschine erstrecken.

Im Einzelnen handelt es sich bei dem Sensor 18 vorzugsweise um einen Laserentfernungssensor mit einem Messstrahl, der sich je nach Ansteuerung des Sensors 18 ablenken lässt. Durch diesen strukturellen Aufbau des Sensors 18 lassen sich ganz unterschiedliche Detektionsaufgaben mit ein und demselben Sensor 18 abarbeiten.

Bemerkenswert bei dem dargestellten und insoweit bevorzugten Ausführungsbeispiel ist die Tatsache, dass der mindestens eine Sensor 18 im Bereich einer Längsachse 20 der Arbeitsmaschine 1 angeordnet ist. Ferner ist der mindestens eine Sensor 18 in einem oberen Bereich der Arbeitsmaschine 1, hier und vorzugsweise auf der Fahrerkabine 21 der Arbeitsmaschine 1 angeordnet, wodurch sich speziell die Boden-Merkmale gut detektieren lassen.

Der vorschlagsgemäße Steuerprozess kann der Wahrnehmung ganz unterschiedlicher Steueraufgaben dienen. In einer bevorzugten Ausgestaltung ist es so, dass in dem Steuerprozess eine Soll-Fahrspur 22 nach einer Fahrspurstrategie basierend auf den analysierten charakteristischen Gutbestands-Eigenschaften und den analysierten charakteristischen Boden-Eigenschaften ermittelt wird.

Bei der obigen Variante für den Steuerprozess kann es beispielsweise vorgesehen sein, dass für die Ermittlung der Soll-Fahrspur 22 sowohl die Gutbestands-Eigenschaften als auch die Boden-Eigenschaften zwingend eingehen. Dies ist beispielsweise der Fall, wenn die Soll-Fahrspur 22 zwar grundsätzlich basierend auf den analysierten charakteristischen Boden-Eigenschaften ermittelt wird. Dabei kann die Ermittlung der Soll-Fahrspur 22 zusätzlich basierend auf den analysierten charakteristischen Boden-Eigenschaften erfolgen, was gewissermaßen als Kontrolle für die erstgenannte Ermittlung der Soll-Fahrspur 22 zu verstehen ist. Dies ist auch sachgerecht, da sich nur mit der gutbestandsbasierten Ermittlung der Soll-Fahrspur 22 garantieren lässt, dass die Arbeitsmaschine 1 optimal im Gutbestand 14 steht.

In einer zweiten Variante für den vorschlagsgemäßen Steuerprozess kann es vorgesehen sein, dass die Soll-Fahrspur 22 entweder allein basierend auf den analysierten charakteristischen Gutbestands-Eigenschaften oder allein basierend auf den analysierten charakteristischen Boden-Eigenschaften ermittelt wird. Insoweit stehen zwei Alternativen für die Ermittlung der Soll-Fahrspur 22 zur Verfügung, so dass je nachdem, welche Eigenschaften vorliegen, die Soll-Fahrspur 22 allein auf den entsprechenden Eigenschaften ermittelt werden kann.

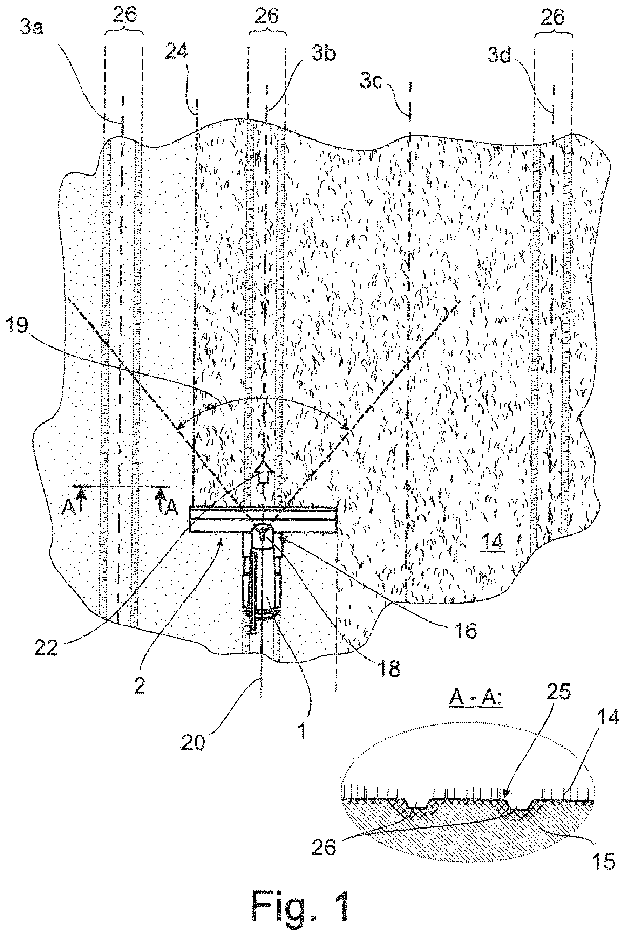

Vorzugsweise betreffen die Gutbestands-Merkmale stets geometrische Merkmale des Gutbestands 14, insbesondere das Höhenprofil 23 des Gutbestands, die Bestandsdichte und/oder die Bestandsdichteverteilung. Eine charakteristische Gutbestands-Eigenschaft ist in besonders bevorzugter Ausgestaltung die Existenz und Lage einer Bestandskante 24, wie in Fig. 1 gezeigt. Alternativ kann es sich bei der charakteristischen Gutbestands-Eigenschaft, die mittels des Fahrerassistenzsystems 10 erfasst werden kann, um die Existenz und Lage einer Pflegefahrgasse oder die Existenz und Lage einer Lagerstelle im Gutbestand 14 handeln.

Die Boden-Merkmale sind vorzugsweise stets geometrische Merkmale des Feldbodens 15, bei denen es sich beispielsweise um Bodentopologien handelt. Eine solche Bodentopologie 25 ist der Schnittdarstellung A-A in Fig. 1 zu entnehmen. In besonders bevorzugter Ausgestaltung ist eine charakteristische Boden-Eigenschaft die Existenz und Lage einer vorhandenen, insbesondere vor der Arbeitsmaschine 1 liegende Fahrgasse 26.

Eine besonders zuverlässige Ermittlung der Soll-Fahrspur 22 lässt sich dadurch erreichen, dass in dem Steuerprozess die Soll-Fahrspur 22 nach einer Fahrspurstrategie basierend auf der charakteristischen Boden-Eigenschaft der Existenz und Lage einer vorhandenen Fahrgasse 26 und basierend auf einer charakteristischen Gutbestands-Eigenschaft bestimmt wird. Bei dieser charakteristischen Gutbestands-Eigenschaft handelt es sich hier und vorzugsweise um die Existenz und Lage einer oben angesprochenen Bestandskante 24. Dadurch ergibt sich grundsätzlich die Möglichkeit, die Soll-Fahrspur 22 basierend auf der Erfassung einer Fahrgasse 26 oder alternativ basierend auf der Erfassung einer Bestandskante 24 zu bestimmen.

Alternativ kann es auch vorgesehen sein, dass die Soll-Fahrspur 22 basierend auf der Ermittlung einer Pflegefahrgasse in dem Gutbestand 14 und basierend auf der Erfassung einer Fahrgasse 26 im Feldboden 15 ermittelt wird. Eine derartige Zusammenführung der gutbestandsspezifischen Detektion und der bodenspezifischen Detektion führt zu einer besonders zuverlässigen Bestimmung der Soll-Fahrspur 22, selbst für den beispielhaften Fall, dass die Bodentopologie 25 für sich genommen keine sichere Bestimmung der Soll-Fahrspur 22 hergibt.

Für die Definition der Fahrspurstrategie sind grundsätzlich verschiedene vorteilhafte Varianten möglich. Bei dem dargestellten und insoweit bevorzugten Ausführungsbeispiel ist es so, dass zumindest ein Teil der Fahrspurstrategie darin besteht, dass für den Fall, dass in der Analyse der charakteristischen Boden-Eigenschaften eine Fahrgasse 26 ermittelt wurde, die Lage der ermittelten Fahrgasse 26 als Lage für die Soll-Fahrspur 22 bestimmt wird. Nur für den Fall, dass in der Analyse der charakteristischen Boden-Eigenschaften keine Fahrgasse 26 ermittelt wurde, ist die Bestimmung der Soll-Fahrspur 22 basierend auf einer in der Analyse der charakteristischen Gutbestands-Eigenschaften ermittelten Bestandskante 24 bestimmt. Es wird, wie weiter oben erläutert, also eine Priorisierung der bodenspezifischen Detektion über der gutbestandsspezifischen Detektion vorgenommen.

Zusätzlich oder alternativ kann die Fahrspurstrategie ganz unterschiedliche Teilstrategien umfassen. Beispielsweise kann es vorgesehen sein, dass eine übergeordnete Teilstrategie eine vorbestimmte Reihenfolge von Teilfahrspuren umfasst. Andre Teilstrategien sind denkbar.

Beispielsweise kann es vorgesehen sein, dass zumindest ein Teil der Fahrspurstrategie darin besteht, dass unter Berücksichtigung der Geometrie der Arbeitsmaschine 1 ein aus ein Befahren durch die Arbeitsmaschine 1 zurückgehender Ernteschaden und/oder ein auf ein Befahren durch die Arbeitsmaschine 1 zurückgehendes Bodenverdichtungsrisiko minimiert wird bzw. werden.

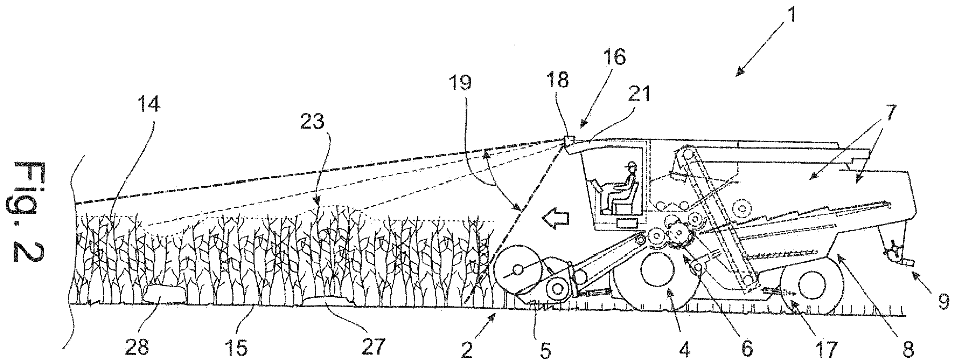

Grundsätzlich ist es auch denkbar, dass in dem vorschlagsgemäßen Steuerprozess eine Kollisionsvermeidungsroutine nach einer Kollisionsvermeidungsstrategie durchgeführt wird, in der eine Ansteuerung der Arbeitsmaschine 1 basierend auf den charakteristischen Boden-Eigenschaften und ggf. den charakteristischen Gutbestands-Eigenschaften ausgelöst wird. Bei der in Fig. 2 dargestellten Situation sind auf dem Feldboden 15 beispielhaft zwei Hindernisse 27, 28 dargestellt. Die Kollisionsvermeidungsstrategie besteht hier und vorzugsweise darin, dass auf die Erfassung der charakteristischen Boden-Eigenschaft der Existenzgrundlage eines solchen Hindernisses 27, 28 eine Anhebung des Vorsatzgeräts, hier des Schneidwerks 5 des Mähdreschers, ausgelöst wird. In der in Fig. 2 dargestellten Situation wird damit vermieden, dass das Schneidwerk 5 des Mähdreschers 1 durch die Hindernisse 27, 28 verstopft oder gar beschädigt wird. Für den Fall, dass es sich bei einem Hindernis um ein Lebewesen handelt, lässt sich durch diese Kollisionsvermeidungsstrategie ein Verletzungsrisiko reduzieren.

Der vorschlagsgemäße Steuerprozess kann grundsätzlich auch das Vorgewendemanagement für einen dargestellten Mähdrescher betreffen. Dabei kann es ganz allgemein vorgesehen sein, dass der Steuerprozess die Ermittlung einer Steuerungssequenz für das Einfahren in den Gutbestand 14 nach einer Vorgewendestrategie basierend auf den charakteristischen Gutbestands-Eigenschaften und den charakteristischen Boden-Eigenschaften umfasst. Die Vorgewendestrategie kann in Abhängigkeit von den gutbestandsspezifischen Eigenschaften und den bodenspezifischen Eigenschaften ein unterschiedliches Heben und Senken des Schneidwerks 5, eine unterschiedliche Fahrgeschwindigkeit im Vorgewende o. dgl. umfassen. Auch eine entsprechende Anpassung der Einstellparameter des Vorsatzgeräts insgesamt ist denkbar.

Weiter ist eine Parametrierung der Antriebsmaschine 1 im Hinblick auf die Befahrbarkeit des Feldbodens 15 möglich. Die Befahrbarkeit lässt sich beispielsweise aus der von der Umfelddetektionseinrichtung 16 erfasste Bodentopologie 25 ermitteln.

Schließlich darf noch darauf hingewiesen werden, dass das vorschlagsgemäße Fahrassistenzsystem über eine Datenverbindung 29 mit weiteren Steuerungskomponenten datentechnisch gekoppelt sein kann. Bei einer solchen Steuerkomponente kann es sich beispielsweise um eine übergeordnete Maschinensteuerung handeln. Denkbar ist aber auch, dass es sich bei einer solchen Steuerkomponente um eine zentrale Datenbank handelt, die eine oben angesprochene Teilstrategie oder eine Schlagkartei betreffend das zu bearbeitende Feld aufweist. Denkbar ist auch, dass die letztgenannte Schlagkartei durch die von der Umfelddetektionseinrichtung 16 erzeugten Sensordaten, durch die resultierenden Merkmale oder durch die wiederum resultierenden Eigenschaften aktualisiert und/oder ergänzt wird.

## Patentansprüche

1. Selbstfahrende landwirtschaftliche Arbeitsmaschine, insbesondere Erntemaschine, zur Abarbeitung eines landwirtschaftlichen Arbeitsprozesses durch ein Abfahren von Fahrspuren (3a-d), mit mehreren Arbeitsorganen (4-9) und mit einem Fahrerassistenzsystem (10) zur Ansteuerung der Arbeitsorgane (4-9), wobei die Arbeitsmaschine (1) eine Umfelddetektionseinrichtung (16) zur Erfassung von Gutbestands-Merkmalen eines Gutbestands (14) und von Boden-Merkmalen eines Feldbodens (15) aufweist,
**dadurch gekennzeichnet,**
**dass** das Fahrerassistenzsystem (10) die Gutbestands-Merkmale auf vorbestimmte charakteristische Gutbestands-Eigenschaften und die Boden-Merkmale auf vorbestimmte charakteristische Boden-Eigenschaften hin analysiert und in Abhängigkeit von den analysierten charakteristischen Gutbestands-Eigenschaften und von den analysierten charakteristischen Boden-Eigenschaften einen Steuerprozess, der die abzufahrenden Fahrspuren (3a-d) betrifft, umsetzt.

2. Selbstfahrende landwirtschaftliche Arbeitsmaschine nach Anspruch 1, **dadurch gekennzeichnet, dass** ein Fahrantrieb (4) und ein automatisches Lenksystem (17) vorgesehen sind und dass das Fahrerassistenzsystem (10) den Fahrantrieb (4) und das Lenksystem (17) basierend auf in dem Steuerprozess ermittelten Prozessgrößen automatisch ansteuert.

3. Selbstfahrende landwirtschaftliche Arbeitsmaschine nach Anspruch 1 oder 2, **dadurch gekennzeichnet, dass** die Umfelddetektionseinrichtung (16) zur Erfassung von Gutbestands-Merkmalen eines Gutbestands (14) und von Boden-Merkmalen eines Feldbodens (15) mindestens einen optischen Sensor (18) zur Erzeugung von Sensordaten aufweist, dessen Erfassungsbereich (19) sich in Fahrtrichtung und quer zu der Fahrtrichtung und/oder entgegen der Fahrtrichtung der Arbeitsmaschine (1) erstreckt.

4. Selbstfahrende landwirtschaftliche Arbeitsmaschine nach Anspruch 3, **dadurch gekennzeichnet, dass** der mindestens eine Sensor (18) im Bereich einer Längsachse (20) der Arbeitsmaschine (1) angeordnet ist.

5. Selbstfahrende landwirtschaftliche Arbeitsmaschine nach einem der vorhergehenden Ansprüche, **dadurch gekennzeichnet, dass** in dem Steuerprozess eine Soll-Fahrspur (22) nach einer Fahrspurstrategie basierend auf den analysierten charakteristischen Gutbestands-Eigenschaften und den analysierten charakteristischen Boden-Eigenschaften ermittelt wird.

6. Selbstfahrende landwirtschaftliche Arbeitsmaschine nach einem der vorhergehenden Ansprüche, **dadurch gekennzeichnet, dass** die Gutbestands-Merkmale geometrische Merkmale des Gutbestands (14), insbesondere das Höhenprofil des Gutbestands (14), die Bestandsdichte und/oder die Bestandsdichte-verteilung, betreffen und dass eine charakteristische Gutbestands-Eigenschaft die Existenz und Lage einer Bestandskante (24) und die Existenz und Lage einer Pflegefahrgasse oder die Existenz und Lage einer Lagerstelle im Gutbestand (14) ist.

7. Selbstfahrende landwirtschaftliche Arbeitsmaschine nach einem der vorhergehenden Ansprüche, **dadurch gekennzeichnet,**
**dass** die Boden-Merkmale geometrische Merkmale des Feldbodens (15), zumindest die Bodentopologie (25), betreffen und dass eine charakteristische Boden-Eigenschaft die Existenz und Lage einer vorhandenen, vor der Arbeitsmaschine (1) liegenden Fahrgasse (26) ist.

8. Selbstfahrende landwirtschaftliche Arbeitsmaschine nach einem der vorhergehenden Ansprüche, **dadurch gekennzeichnet, dass** in dem Steuerprozess eine Soll-Fahrspur (22) nach einer Fahrspurstrategie basierend auf der charakteristischen Boden-Eigenschaft der Existenz und Lage einer vorhandenen Fahrgasse (26) und basierend auf einer charakteristischen Gutbestands-Eigenschaft, zumindest der Existenz und Lage einer Bestandskante (24), ermittelt wird.

9. Selbstfahrende landwirtschaftliche Arbeitsmaschine nach einem der vorhergehenden Ansprüche, **dadurch gekennzeichnet,**
**dass** zumindest ein Teil der Fahrspurstrategie darin besteht, dass für den Fall, dass in der Analyse der charakteristischen Boden-Eigenschaften eine Fahrgasse (26) ermittelt wurde, die Lage der ermittelten Fahrgasse (26) als Lage für die Soll-Fahrspur (22) bestimmt wird, und dass für den Fall, dass in der Analyse der charakteristischen Boden-Eigenschaften keine Fahrgasse (26) ermittelt wurde, nunmehr die Soll-Fahrspur (22) basierend auf einer in der Analyse der charakteristischen Gutbestands-Eigenschaften ermittelten Bestandskante bestimmt wird.

10. Selbstfahrende landwirtschaftliche Arbeitsmaschine nach einem der vorhergehenden Ansprüche, **dadurch gekennzeichnet,**
**dass** zumindest ein Teil der Fahrspurstrategie darin besteht, dass unter Berücksichtigung der Geometrie der Arbeitsmaschine (1) ein auf ein Befahren durch die Arbeitsmaschine (1) zurückgehender Ernteschaden und/oder ein auf ein Befahren durch die Arbeitsmaschine (1) zurückgehendes Bodenverdichtungsrisiko minimiert wird bzw. werden.

11. Selbstfahrende landwirtschaftliche Arbeitsmaschine nach einem der vorhergehenden Ansprüche, **dadurch gekennzeichnet, dass** in dem Steuerprozess eine Kollisionsvermeidungsroutine nach einer Kollisionsvermeidungsstrategie durchgeführt wird, in der eine Ansteuerung der Arbeitsmaschine (1), insbesondere eines Vorsatzgeräts (2), basierend auf den charakteristischen Boden-Eigenschaften und ggf. den charakteristischen Gutbestands-Eigenschaften umgesetzt wird.

12. Selbstfahrende landwirtschaftliche Arbeitsmaschine nach Anspruch 11, **dadurch gekennzeichnet, dass** die Kollisionsvermeidungsstrategie darin besteht, dass auf die Erfassung der charakteristischen Boden-Eigenschaft der Existenz und Lage eines Hindernisses (27, 28) auf dem Feldboden (15) eine Anhebung des Vorsatzgeräts (2) der Arbeitsmaschine (1) umgesetzt wird.

13. Selbstfahrende landwirtschaftliche Arbeitsmaschine nach einem der vorhergehenden Ansprüche, **dadurch gekennzeichnet,**
**dass** ein Steuerprozess die Ermittlung einer Steuerungssequenz für das Einfahren in den Gutbestand (14)nach einer Vorgewendestrategie basierend auf den charakteristischen Gutbestands-Eigenschaften und den charakteristischen Boden-Eigenschaften umfasst.

## Claims

1. A self-propelled agricultural working machine, in particular a harvester, for implementing an agricultural working process by travelling along lanes (3a-d), comprising a plurality of working members (4-9) and a driver assist system (10) for controlling the working members (4-9), wherein the working machine (1) has a surroundings detection device (16) for detecting crop stand features of a crop stand (14) and ground features of a field ground (15),
**characterised in that**
the driver assist system (10) analyses the crop stand features for predetermined characteristic crop stand properties and the ground features for predetermined characteristic ground properties and in dependence on the analysed characteristic crop stand properties and the analysed characteristic ground properties implements a control process which concerns the lanes (3a-d) to be travelled.

2. A self-propelled agricultural working machine according to claim 1 **characterised in that** there are provided a travel drive (4) and an automatic steering system (17) and the driver assist system (10) automatically controls the travel drive (4) and the steering system (17) based on process parameters ascertained in the control process.

3. A self-propelled agricultural working machine according to claim 1 or claim 2 **characterised in that** the surroundings detection device (16) for detecting crop stand features of a crop stand (14) and ground features of a field ground (15) has at least one optical sensor (18) for generating sensor data, the detection range (19) thereof extending in the travel direction and transversely to the travel direction and/or in opposite relationship to the travel direction of the working machine (1).

4. A self-propelled agricultural working machine according to claim 3 **characterised in that** the at least one sensor (18) is arranged in the region of a longitudinal axis (20) of the working machine (1).

5. A self-propelled agricultural working machine according to one of the preceding claims **characterised in that** in the control process a target lane (22) is ascertained in accordance with a lane strategy based on the analysed characteristic crop stand properties and the analysed characteristic ground properties.

6. A self-propelled agricultural working machine according to one of the preceding claims **characterised in that** the crop stand features concern geometrical features of the crop stand (14), in particular the height profile of the crop stand (14), the stand density and/or the stand density distribution and that a characteristic crop stand property is the existence and position of a stand edge (24) and the existence and position of a maintenance travel lane or the existence and position of a storage location in the crop stand (14).

7. A self-propelled agricultural working machine according to one of the preceding claims **characterised in that** the ground features concern geometrical features of the field ground (15), at least the ground topology (25) and that a characteristic ground property is the existence and position of an existing travel lane (26) in front of the working machine (1).

8. A self-propelled agricultural working machine according to one of the preceding claims **characterised in that** in the control process a target lane (22) is ascertained in accordance with a lane strategy based on the characteristic ground properties of the existence and position of an existing travel lane (26) and based on a characteristic crop stand property, at least the existence and position of a stand edge (24).

9. A self-propelled agricultural working machine according to one of the preceding claims **characterised in that** at least a part of the lane strategy provides that in the event that a travel lane (6) was ascertained in the analysis of the characteristic ground properties, the position of the ascertained travel lane (26) is determined as the position for the target lane (22) and in the event that no travel lane (26) was ascertained in the analysis of the characteristic ground properties the target lane (22) is now determined based on a stand edge ascertained in the analysis of the characteristic crop stand properties.

10. A self-propelled agricultural working machine according to one of the preceding claims **characterised in that** at least a part of the lane strategy provides that having regard to the geometry of the working machine (1) crop damage attributed to travel thereon by the working machine and/or a ground compaction risk attributed to being driven on by the working machine (1) is or are minimised.

11. A self-propelled agricultural working machine according to one of the preceding claims **characterised in that** in the control process a collision avoidance routine is carried out in accordance with a collision avoidance strategy, in which control of the working machine (1), in particular an attachment (2), is implemented based on the characteristic ground properties and optionally the characteristic crop stand properties.

12. A self-propelled agricultural working machine according to claim 11 **characterised in that** the collision avoidance strategy provides that in response to detection of the characteristic ground property of the existence and position of an obstacle (27, 28) on the field ground (15) lifting of the attachment (2) of the working machine (1) is implemented.

13. A self-propelled agricultural working machine according to one of the preceding claims **characterised in that** a control process includes ascertaining a control sequence for travelling into the crop stand (14) according to a headland strategy based on the characteristic crop stand properties and the characteristic ground properties.

## Revendications

1. Machine de travail agricole automotrice, en particulier machine de récolte, pour exécuter un processus de travail agricole en empruntant des traces des passage (3a-d), comprenant plusieurs organes de travail (4-9) et comprenant un système d'assistance à la conduite (10) pour agir sur les organes de travail (4-9), la machine de travail (1) comportant un équipement de détection d'environnement (16) pour détecter des caractéristiques de culture de produit d'une culture de produit (14) et des caractéristiques de sol d'un sol de champ (15), **caractérisée en ce que** le système d'assistance à la conduite (10) analyse les caractéristiques de culture de produit sous l'angle de propriétés de culture de produit caractéristiques prédéfinies et les caractéristiques de sol sous l'angle de propriétés de sol caractéristiques prédéfinies et, en fonction des propriétés de culture de produit caractéristiques analysées et des propriétés de sol caractéristiques analysées, met en œuvre un processus de commande qui concerne les traces de passage (3a-d) à emprunter.

2. Machine de travail agricole automotrice selon la revendication 1, **caractérisée en ce qu'**un groupe propulseur (4) et un système de direction automatique (17) sont prévus, et **en ce que** le système d'assistance à la conduite (10) agit automatiquement sur le groupe propulseur (4) et sur le système de direction (17) sur la base de grandeurs de processus déterminées dans le processus de commande.

3. Machine de travail agricole automotrice selon la revendication 1 ou 2, **caractérisée en ce que**, pour détecter des caractéristiques de culture de produit d'une culture de produit (14) et des caractéristiques de sol d'un sol de champ (15), l'équipement de détection d'environnement (16) comprend, pour générer des données de capteur, au moins un capteur optique (18) dont la zone de couverture (19) s'étend dans le sens de la marche et transversalement au sens de la marche et/ou à l'opposé du sens de la marche de la machine de travail (1).

4. Machine de travail agricole automotrice selon la revendication 3, **caractérisée en ce que** le au moins un capteur (18) est disposé dans la zone d'un axe longitudinal (20) de la machine de travail (1).

5. Machine de travail agricole automotrice selon une des revendications précédentes, **caractérisée en ce que**, dans le processus de commande, une trace de passage de consigne (22) est déterminée selon une stratégie de trace de passage sur la base des propriétés de culture de produit caractéristiques analysées et des propriétés de sol caractéristiques analysées.

6. Machine de travail agricole automotrice selon une des revendications précédentes, **caractérisée en ce que** les caractéristiques de culture de produit concernent des caractéristiques géométriques de la culture de produit (14), en particulier le profil de hauteur de la culture de produit (14), la densité de culture et/ou la répartition de densité de culture, et **en ce qu'**une propriété de culture de produit caractéristique est l'existence et l'emplacement d'un bord de culture (24) et l'existence et l'emplacement d'une allée de service ou l'existence et l'emplacement d'une zone versée dans la culture de produit (14).

7. Machine de travail agricole automotrice selon une des revendications précédentes, **caractérisée en ce que** les caractéristiques de sol concernent des caractéristiques géométriques du sol de champ (15), au moins la topologie de sol (25), et **en ce qu'**une propriété de sol caractéristique est l'existence et l'emplacement d'une allée de circulation (26) existante située devant la machine de travail (1).

8. Machine de travail agricole automotrice selon une des revendications précédentes, **caractérisée en ce que**, dans le processus de commande, une trace de passage de consigne (22) est déterminée selon une stratégie de trace de passage sur la base de la propriété de sol caractéristique de l'existence et de l'emplacement d'une allée de circulation existante (26) et sur la base d'une propriété de culture de produit caractéristique, au moins de l'existence et de l'emplacement d'un bord de culture (24).

9. Machine de travail agricole automotrice selon une des revendications précédentes, **caractérisée en ce qu'**au moins une partie de la stratégie de trace de passage consiste **en ce que**, pour le cas où une allée de circulation (26) est déterminée lors de l'analyse des propriétés de sol caractéristiques, l'emplacement de l'allée de circulation (26) est défini comme emplacement de la trace de passage de consigne (22) et **en ce que**, pour le cas où aucune allée de circulation (26) n'a été déterminée lors de l'analyse des propriétés de sol caractéristiques, la trace de passage de consigne (22) est désormais définie sur la base d'un bord de culture déterminé lors de l'analyse des propriétés de culture de produit caractéristiques.

10. Machine de travail agricole automotrice selon une des revendications précédentes, **caractérisée en ce qu'**au moins une partie de la stratégie de trace de passage consiste **en ce que**, en tenant compte de la géométrie de la machine de travail (1), un dommage de culture imputable à un passage de la machine de travail (1) et/ou un risque de compactage du sol imputable à la machine de travail (1) est, respectivement sont minimalisés.

11. Machine de travail agricole automotrice selon une des revendications précédentes, **caractérisée en ce que**, dans le processus de commande, un programme d'évitement de collision est réalisé selon une stratégie d'évitement de collision, durant lequel une action sur la machine de travail (1), en particulier sur un outil frontal (2), est mise en œuvre sur la base des propriétés de sol caractéristiques et éventuellement des propriétés de culture de produit caractéristiques.

12. Machine de travail agricole automotrice selon la revendication 11, **caractérisée en ce que** la stratégie d'évitement de collision consiste **en ce que**, en cas de détection de la propriété de sol caractéristique de l'existence et de l'emplacement d'un obstacle (27, 28) sur le sol de champ (15), un levage de l'outil frontal (2) de la machine de travail (1) est mis en œuvre.

13. Machine de travail agricole automotrice selon une des revendications précédentes, **caractérisée en ce qu'**un processus de commande inclut la détermination d'une séquence de commande pour l'entrée dans la culture de produit (14) selon une stratégie de tournière sur la base des propriétés de culture de produit caractéristiques et des propriétés de sol caractéristiques.
